(19) Europäisches Patentamt / European Patent Office / Office européen des brevets

(11) **EP 3 608 624 B1**

(12) **EUROPÄISCHE PATENTSCHRIFT**

(45) Veröffentlichungstag und Bekanntmachung des Hinweises auf die Patenterteilung:
**29.06.2022   Patentblatt 2022/26**

(21) Anmeldenummer: **18187566.7**

(22) Anmeldetag: **06.08.2018**

(51) Internationale Patentklassifikation (IPC):
**G01B 7/14** (2006.01)

(52) Gemeinsame Patentklassifikation (CPC):
**G01B 7/144; G01D 5/241**

(54) **KAPAZITIVER DISTANZSENSOR**

CAPACITIVE DISTANCE SENSOR

CAPTEUR CAPACITIF DE DISTANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.02.2020   Patentblatt 2020/07**

(73) Patentinhaber: **Hexagon Technology Center GmbH**
**9435 Heerbrugg (CH)**

(72) Erfinder:
• **ROHNER, Marcel**
**9410 Heiden (CH)**
• **BAUMANN, Lukas**
**9000 St.Gallen (CH)**
• **REITERER, Michael**
**39018 Vilpian (BZ) (IT)**
• **ISELI, Claudio**
**9434 Au (CH)**
• **TARIZZO, Alberto**
**9436 Balgach (CH)**

(74) Vertreter: **Kaminski Harmann**
**Patentanwälte AG**
**Landstrasse 124**
**9490 Vaduz (LI)**

(56) Entgegenhaltungen:
**US-A- 4 187 460      US-A- 4 347 478**
**US-A1- 2011 095 771   US-A1- 2012 041 712**

**Beschreibung**

Die Erfindung betrifft einen kapazitiven Distanzsensor nach dem Oberbegriff des Anspruchs 1, ein Verfahren zum Bestimmen von Distanzen mit einem ebensolchen Distanzsensor nach Anspruch 14 und ein ebensolches Computerprogrammprodukt nach Anspruch 15.

Kapazitive Sensoren sind aus dem Stand der Technik bekannt und z.B. in der US 4,187,460, der US 4,347,478, der US 2011/0095771 A1 oder der US 2012/0041712 A1 beschrieben, darunter speziell auch kapazitive Sensoren zur präzisen Messung des Abstands zu einem Objekt. Solche Sensoren werden beispielsweise verwendet, um den Abstand zweier relativ zueinander beweglicher Teile eines Präzisionslagers zu messen bzw. die Lücke zwischen den beiden Teilen zu überwachen, z.B. den Zwischenraum oder Spalt zwischen dem Rollenkranz und der Walze. Solche Präzisionslager werden beispielsweise in Präzisionsmessmaschinen oder -geräten wie Theodoliten, Lasertrackern oder Laserscannern eingesetzt oder auch in Präzisionsfertigungsmaschinen zur präzisen Herstellung von Werkstücken.

Beispielsweise ist in der US 9,435,645 B2 die Verwendung eines oder mehrerer kapazitiver Distanzsensoren in den Lagern einer 3-Achsen-Koordinatenmessmaschinen (CMM) beschrieben, um den Abstand des beweglichen Lagerteils zur Führung zu bestimmen bzw. zu überwachen, wodurch Abweichungen vom Ideal- oder Sollabstand feststellen und ggf. kompensieren zu können, welche ansonsten zu einer Verfälschung der zu messenden Koordinaten führen.

Die US 9,891,035 B2 beschreibt einen kapazitiven Distanzsensor, welcher zur Abstandsmessung zwischen zwei relativ zueinander beweglichen Lagerteilen ausgebildet ist und hierfür einen Messbereich von etwa 0 bis 100 Mikrometern aufweist. Hierfür wird der Distanzsensor an einem der beiden Lagerteile angebracht, wobei die Kapazität durch eine Sensorelektrode und die ihr jeweils gegenüberliegende Fläche des anderen Lagerteils gebildet ist. Zur Verbesserung des Messergebnisses weist der Distanzsensor einen speziellen Aufbau mit speziell geformter Sensorelektrode und Schutzelektroden auf.

Nachteilig am Distanzsensor der US 9,891,035 B2 ist jedoch, dass Messfehler, die durch eine Verkippung des Sensors bzw. der Sensorelektrode, also Abweichung von der idealen parallelen Ausrichtung der kapazitiven Flächen zueinander, bedingt sind, nicht kompensierbar sind. Solche Abweichungen entstehen z.B. durch ungenauen Einbau des Sensors oder aufgrund von Altersprozessen oder Umwelteinflüsse wie z.B. Temperaturschwankungen. Weiter sind Messfehler, die durch kapazitive Randeffekte -also Effekte, die durch das Abweichen vom theoretischen Idealfall unendlich ausgedehnter kapazitiver Flächen- entstehen, nur mit erheblichem Kalibrationsaufwand kompensierbar. Der Distanzsensor der US 9,891,035 B2 zeigt dadurch ein Ansprechverhalten, das über den Messbereich nicht linear zum Kehrwert ist, wie aus den Figuren 4A-4C der US 9,891,035 B2 ersichtlich, welche die Ausgangsspannung über die Messdistanz darstellen. Ein linearer Zusammenhang zwischem dem Kehrwert der Kapazität bzw. Ausgangsspannung und der Distanz wäre jedoch hinsichtlich des Messvorgangs vorteilhaft. Allenfalls die Ausführungsform mit einer relativ grossen Sensorelektrode weist ein, allerdings auch nur näherungsweise, lineares Verhalten auf, dies jedoch aufgrund der notwendigen grossen Ausdehnung der Sensorelektrode zu Lasten der Ortsauflösung.

Die Aufgabe der vorliegenden Erfindung besteht daher in der Bereitstellung eines verbesserten kapazitiven Distanzsensors.

Eine weitere Aufgabe der vorliegenden Erfindung besteht in der Bereitstellung eines kapazitiven Distanzsensors mit verbessertem linearem Ansprechverhalten.

Eine weitere Aufgabe der vorliegenden Erfindung besteht in der Bereitstellung eines kapazitiven Distanzsensors mit Neigungskompensation.

Eine weitere Aufgabe der vorliegenden Erfindung besteht in der Bereitstellung eines kapazitiven Distanzsensors mit Kompensation kapazitiver Randeffekte.

Diese Aufgaben werden erfindungsgemäss durch die kennzeichnenden Merkmale der unabhängigen Ansprüche oder durch Merkmale der abhängigen Ansprüche gelöst bzw. diese Lösungen weitergebildet.

Die vorliegende Erfindung betrifft einen kapazitiven Distanzsensor zur Messung einer Distanz zu einem Objekt, wobei der Distanzsensor vorzugsweise eine Messgenauigkeit im Submikrometerbereich bis Mikrometerbereich aufweist. Der Distanzsensor weist wenigstens eine erste flächige Sensorelektrode auf, wobei die Sensorelektrode ausgebildet ist, mit einer gegenüberliegenden (Ober-)Fläche des Objekts eine von der Distanz abhängige Kapazität zu bilden, so dass basierend auf einer Kapazitätsmessung die Distanz bestimmbar ist.

Der kapazitive Distanzsensor weist weiter wenigstens eine der ersten Sensorelektrode beigeordnete separate Neigungskompensationselektrode auf, wobei Sensorelektrode und Neigungskompensationselektrode in einer Ebene liegen, wobei es sich bei der Ebene auch um eine gekrümmte Ebene handeln kann, so dass anhand der Kapazitäten der Neigungskompensationselektrode Messfehler kompensierbar sind, welche durch Abweichungen von einer idealen Parallelität von Sensorelektrode und gegenüberliegender Objektfläche bedingt sind (also Verkippungsfehler oder Neigungsfehler).

Ein weiterer Aspekt der vorliegenden Erfindung betrifft einen kapazitiven Distanzsensor welcher neben der oben dargestellten ersten Sensorelektrode -dieser in der gleichen Ebene beigeordnet- wenigstens eine separate Randeffektkompensationselektrode aufweist. Diese Randeffektkompensationselektrode hat dabei gleichen Umfang wie die erste Sensorelektrode, aber unterschiedliche (Wirk-)Fläche, so dass mittels der Kapazität der Randeffektkompensationselektrode Messfehler kompensierbar sind, welche durch kapazitive Randeffekte der ersten Sensorelektrode bedingt sind.

Bevorzugte Ausführungsformen weisen sowohl eine Randeffektkompensationselektrode als auch eine Neigungskompensationselektrode auf, wobei in besonders vorteilhaften Ausführungsformen die beiden Kompensationselektroden identisch sind, d.h. beide Funktionen werden durch eine Kompensationselektrode erfüllt. Anders formuliert ist die wenigstens eine Kompensationselektrode so ausgebildet, dass damit neben Abweichungen von der idealen parallelen Ausrichtung der Sensorelektrode bzw. des Sensors auch Abweichungen von der idealen/theoretischen randlosen oder unendlich ausgedehnten Sensorelektrode kompensierbar sind.

Erfindungsgemäss weist also der kapazitive Distanzsensor neben der eigentlichen oder hauptsächlichen Sensorelektrode mindestens eine weitere kapazitive Kompensationselektrode auf, so dass neben der Hauptkapazität zwei Hilfs- oder Nebenkapazitäten vorliegen, welche so ausgebildet sind, dass die Hauptkapazität beeinflussende Verkippungen des Sensors ausgeglichen werden bzw. gegebenenfalls das Ausmass der Verkippung ermittelt und bei der Bestimmung der Distanz berücksichtigt werden kann, und/oder die Distanzbestimmung störende (bzw. einer Auswertung nur schwer zugängliche) Kapazitäten des Rands der Sensorelektrode kompensiert werden können.

Besonders vorteilhaft ist die Kompensierbarkeit dahingehend, dass der kapazitive Distanzsensor dadurch ein lineares Ansprechverhalten zeigt. D.h. mittels der Kompensationselektrode(n) kann eine Distanzbestimmung erfolgen, bei welcher ein linearer Zusammenhang zwischen (Kehrwert der) Distanz und gemessener Kapazität vorherrscht. Ein solches lineares Verhalten ermöglicht eine einfache Kalibrierung des Distanzsensors, bei der z.B. auf aufwändige Erzeugung von Nachschlagetabellen verzichtet werden kann (deren Verwendung bei der Messauswertung wiederum relativ aufwändig ist), und eine vergleichsweise einfache Auswertevorrichtung bzw. Auswerteprozedur und damit eine einfache und schnelle Bestimmung der gesuchten Distanz.

In einer bevorzugten Ausführungsform weist der kapazitive Distanzsensor zusätzlich zur ersten Sensorelektrode wenigstens eine zweite flächige Sensorelektrode auf, welche baugleich zur ersten Sensorelektrode, in der gleichen Ebene wie diese angeordnet und elektrisch gegengleich ansprechbar ist, so dass die Distanz basierend auf einer differentiellen Kapazitätsmessung mit Hilfe der beiden Sensorelektroden bestimmbar ist. Der Distanzsensor weist also zwei gegenpolig aufladbare Sensorelektroden auf, mittels derer ein differentieller Messvorgang erfolgt. Dadurch wird die Messung unabhängig von den Impedanzverhältnissen der gegenüberliegenden Fläche und es besteht keine gegenseitige Beeinflussung, falls mehrere Sensoren auf eine gemeinsame, d.h. elektrisch verbundene Fläche messen. Vorzugsweise sind der zweiten Sensorelektrode ebensolche Kompensationselektroden wie oben beschrieben beigeordnet. Beispielsweise sind die beiden Sensorelektroden direkt nebeneinander angeordnet und zusammen von z.B. zwei Kompensationselektroden umgeben, welche hinsichtlich Randeffektkompensation insgesamt gleichen Umfang wie die beiden Sensorelektroden zusammen aufweisen und/oder zur Kompensation einer etwaigen Verkippung der (Sensor-)Elektrodenebene dienen.

Im bevorzugten Fall, dass der obige Distanzsensor mit wenigstens einer ersten und einer zweiten Sensorelektrode wenigstens zwei Kompensationselektroden aufweist, weist der Distanzsensor vier jeweils mit einer der Elektroden kontaktierte bzw. kontaktierbare Ladungsintegratoren auf, so dass simultan jeweils eine erste und eine zweite Sensorelektrode und zwei Kompensationselektroden auslesbar bzw. auswertbar sind.

In einer Fortbildung des kapazitiven Distanzsensors bilden alle Sensorelektroden und Kompensationselektroden zusammen eine kreisförmige und in der Ebene symmetrische Anordnung, wobei die Sensorelektroden Kreissegmente bilden und die Kompensationselektroden aussenliegend konzentrisch um die Sensorelektroden angeordnet sind.

Beispielsweise ist die Abfolge der ersten und zweiten Sensorelektroden abwechselnd zueinander und die Kompensationselektroden bilden einen Ring um die Sensorelektroden herum.

In einer weiteren Fortbildung weisen die Elektroden Kontaktlöcher zur elektrischen Kontaktierung auf und die Anzahl an Kontaktlöchern der Kompensationselektroden ist gleich der Anzahl an Kontaktlöchern der Sensorelektroden, wobei alle Sensorelektroden gleiche Anzahl an Kontaktlöchern aufweisen, so dass der Einfluss der Kontaktstellen überall gleich ist. Vor allem im Falle einer zuvor beschriebenen durch die Sensorelektroden und Kompensationselektroden gebildeten symmetrischen Anordnung sind die Kontaktlöcher ebenfalls symmetrisch angeordnet bzw. so platziert, dass die Symmetrie nicht gestört ist.

In einer weiteren Fortbildung weist der Distanzsensor zur elektrischen Kontaktierung der Sensor- und Kompensationselektroden elektrisch abgeschirmte Leitungen auf, wobei die Leitungen auf gleiches elektrisches Potential wie die jeweilige Elektrode schaltbar sind (aktive Abschirmung) und/oder der Distanzsensor wenigstens eine passive elektrische Abschirmelektrode auf fix definiertem elektrischem Potential aufweist. Die Abschirmelektroden schirmen dabei jede Leitung einzeln oder mehrere oder alle Leitungen insgesamt.

Als weitere Option ist der kapazitive Distanzsensor zur fortlaufenden Echtzeitmessung der Distanz zum Objekt ausgebildet. Mit anderen Worten ist der Distanzsensor dergestalt, dass eine Überwachung oder permanente Kontrolle des Abstands zum Objekt bzw. des Abstands zwischen zwei Objekten ermöglicht ist, insbesondere auch die simultane Messung mehrerer Sensoren auf dieselbe gegenüberliegende Fläche ohne Verwendung von Multiplexing-Verfahren wie beispielsweise Zeitmultiplex.

Gegenstand der vorliegenden Erfindung ist zudem Verfahren zum fortlaufenden Bestimmen eines Abstands zwischen zwei Maschinenteilen mittels des erfindungsgemässen kapazitiven Distanzsensors, wobei die beiden Maschinenteile vorgesehen sind zum parallelen Verschieben relativ zueinander entlang einer definierten Führungsrichtung mit einem Sollabstand von vorzugsweise maximal 1000 Mikrometern. Das Verschieben ist dabei vorzugsweise translatorischer Art, im Speziellen handelt es sich um eine lineare Verschiebung, also eine Bewegung mit (idealerweise) nur einem (translatorischen) Freiheitsgrad, z.B. in einem Linearlager.

Mit anderen Worten wird verfahrensgemäss mittels des erfindungsgemässen kapazitiven Distanzsensors der Abstand zwischen den beiden Maschinenteilen kontinuierlich und in Echtzeitbestimmt, wodurch eine dynamische Überwachung oder permanente Kontrolle des Abstands bzw. der Gleichmässigkeit oder Konstanz des Parallelverschiebens ermöglicht ist.

In einer Weiterbildung des Verfahrens wird mittels des mit wenigstens einer, insbesondere wenigstens zwei, Neigungskompensationselektrode ausgestatteten kapazitiven Distanzsensors, welche zur Kompensation von Abweichungen von der idealen Parallelität dienen, der Winkel zwischen Sensorfläche und dem gegenüberliegenden Maschinenteil bestimmt. Damit wird also der erfindungsgemässe Distanzsensor genutzt, um letztlich den Winkel zwischen den beiden Maschinenteilen zu bestimmen bzw. das Ausmass einer etwaigen Abweichung von der Parallelität der beiden Maschinenteile zueinander oder von der Parallelität der Verschiebebewegung.

Ein weiterer Gegenstand der vorliegenden Erfindung ist ein Präzisionslager, insbesondere ein (hydrodynamisches) Gleitlager oder Luftlager, Magnetlager oder Wälzlager, mit zwei, insbesondere in einer Ebene, relativ zueinander beweglichen Teilen. Vorzugsweise sind die beiden Teile in Form einer translatorischen Bewegung relativ zueinander verschiebbar. Im Besonderen handelt es sich um eine lineare Bewegung, so dass es sich um ein Linearlager handelt. Das Präzisionslager ist dadurch gekennzeichnet, dass das Lager wenigstens einen erfindungsgemässen kapazitiven Distanzsensor zur, insbesondere fortlaufenden, Messung eines Abstands zwischen den zwei Teilen aufweist.

Somit ist beispielsweise das Einhalten eines Sollabstands zwischen den beiden Lagerteilen mittels des erfindungsgemässen Distanzsensors überwachbar. Bei den Präzisionslagern handelt es sich insbesondere um solche, bei denen ein solcher Sollabstand bis zu 1000 Mikrometern beträgt und die zu bestimmenden Abweichungen im SubMikrometerbereich liegen.

Beispielsweise handelt es sich bei dem Präzisionslager um ein Präzisionslager, welches zur Verwendung in einem Präzisionsmessgerät, insbesondere einer Koordinatenmessmaschine, Theodolit, Laserscanner oder Lasertracker, vorgesehen ist. Alternativ oder zusätzlich ist das Präzisionslager vorgesehen zur Verwendung in einer Präzisionsbearbeitungsmaschine, z.B. einer CNC-Fertigungsapparatur und/oder zur Verwendung in einem Präzisionsgelenkarm, z.B. einem Roboterarm.

Die vorliegende Erfindung beinhaltet des Weiteren ein Computerprogrammprodukt oder Computer-Datensignal, verkörpert durch eine elektromagnetische Welle, mit Programmcode, zur Steuerung bzw. Durchführung des erfindungsgemässen Verfahrens zur kapazitiven Messung von Distanzen Vorzugsweise beinhaltet dies einen maschinenlesbaren Träger, auf dem ein ebensolches Computerprogrammprodukt gespeichert ist. Insbesondere ist das Computerprogrammprodukt vorgesehen zur Ausführung in der Steueranlage eines erfindungsgemässen Präzisionslagers bzw. einer ein erfindungsgemässen Präzisionslager verwendende Präzisionsmess- oder Fertigungsmaschine oder eines Präzisionsgelenkarms.

Die vorliegende Erfindung bietet den Vorteil einer verbesserten, präzisen und echtzeitfähigen Messung einer Distanz, insbesondere bis beispielsweise maximal 1000 Mikrometern, zu einem Objekt bzw. des Abstands zwischen zwei Objekten, indem mittels der vorgesehenen Kompensationselektroden Ausrichtungsfehler und Abweichungen von der idealen, unendlich ausgestreckten Sensorelektrode kompensierbar sind. Damit werden die Anforderungen an die Fertigung und Einbau eines solchen Distanzsensors gesenkt bzw. die Messgenauigkeit bei gleich bleibenden Herstellungsanforderungen erhöht.

Vorteilhaft ist insbesondere, dass aufgrund der Kompensationselektroden ein lineares kapazitives Ansprechverhalten des Distanzsensors erzielbar ist, was eine vergleichsweise wenig aufwändige Kalibration und auch Signalauswertung ermöglicht und z.B. für eine Steigerung der Messrate benutzt werden kann.

Besondere Vorteile bietet der erfindungsgemässe Distanzsensor im Hinblick auf die kontinuierliche Distanzermittlung zwischen zwei sich relativ zueinander bewegenden Objekten, wie beispielsweise Maschinenteile oder Teile eines Präzisionslagers. Der erfindungsgemässe kapazitive Distanzsensor ermöglicht eine präzise fortlaufende Bestimmung oder Überwachung des Abstands in Echtzeit der beiden Objekte zueinander, so dass Abweichungen von einem Sollabstand oder einer idealen Distanz kompensiert bzw. berücksichtigt werden können.

Ein erfindungsgemässes Präzisionslager, welches mit einem erfindungsgemässen kapazitiven Distanzsensor ausgestattet ist, ermöglicht eine fortwährende Kontrolle des Abstands der zueinander beweglichen Lagerteile. Je nach Ausführungsform kann dabei der Abstand explizit bestimmt werden und z.B. bei der 3D-Koordinatenmessung einer Koordinatenmessmaschine mit einbezogen werden.

Der kapazitive Distanzsensor ermöglicht eine -verglichen mit Distanzsensoren des Stands der Technik- präzisere und kontinuierliche Abstandsmessung bzw. -überwachung in Echtzeit (>100Hz). Somit ist z.B. ein präziseres oder empfindlicheres und damit zuverlässigeres oder aussagekräftigeres Lagermonitoring möglich. Beispielsweise lassen sich damit Unregelmässigkeiten des Lagerlaufs früher und/oder genauer ermitteln und damit besser Gegenmassnahmen einleiten.

Der erfindungsgemässe kapazitive Distanzsensor sowie das erfindungsgemässe Verfahren sowie das erfindungsgemässe Präzisionslager werden nachfolgend anhand von in der Zeichnung schematisch dargestellten Ausführungsbeispielen rein beispielhaft näher beschrieben.

Im Einzelnen zeigen

Fig.1a    schematisch einen kapazitiven Distanzsensor des Stands der Technik,

Fig. 1b    schematisch eine erste Ausführungsform eines erfindungsgemässen kapazitiven Distanzsensors mit Neigungskompensation,

Fig.2    schematisch eine zweite Ausführungsform eines erfindungsgemässen kapazitiven Distanzsensors mit Kompensation kapazitiver Randeffekte,

Fig.3    ein schematisches Beispiel für lineares Verhalten eines erfindungsgemässen kapazitiven Distanzsensors,

Fig.4    schematisch eine weitere Ausführungsform eines erfindungsgemässen kapazitiven Distanzsensors mit differentieller Messung,

Fig. 5    schematisch in Aufsicht eine bevorzugte Ausführungsform eines erfindungsgemässen kapazitiven Distanzsensors mit kreisförmiger Elektrodenanordnung,

Fig. 6    schematisch ein Beispiel für einen erfindungsgemässen kapazitiven Distanzsensor mit Auswerteschaltung,

Fig. 7    schematisch ein Beispiel für einen erfindungsgemässen kapazitiven Distanzsensor mit Abschirmung,

Fig. 8    schematisch ein Beispiel für eine Schaltsequenz eines erfindungsgemässen kapazitiven Distanzsensors mit aktiver Abschirmung,

Fig.9    in einer auseinandergezogenen Schrägansicht eine bevorzugte Ausführungsform eines erfindungsgemässen kapazitiven Distanzsensors,

Fig. 10    schematisch einen Querschnitt eines Präzisionsdrehlagers, welches mit einem erfindungsgemässen kapazitiven Distanzsensor ausgestattet ist, und

Fig. 11    schematisch eine Seitenansicht eines Präzisionslinearlagers, welches mit erfindungsgemässen kapazitiven Distanzsensoren ausgestattet ist.

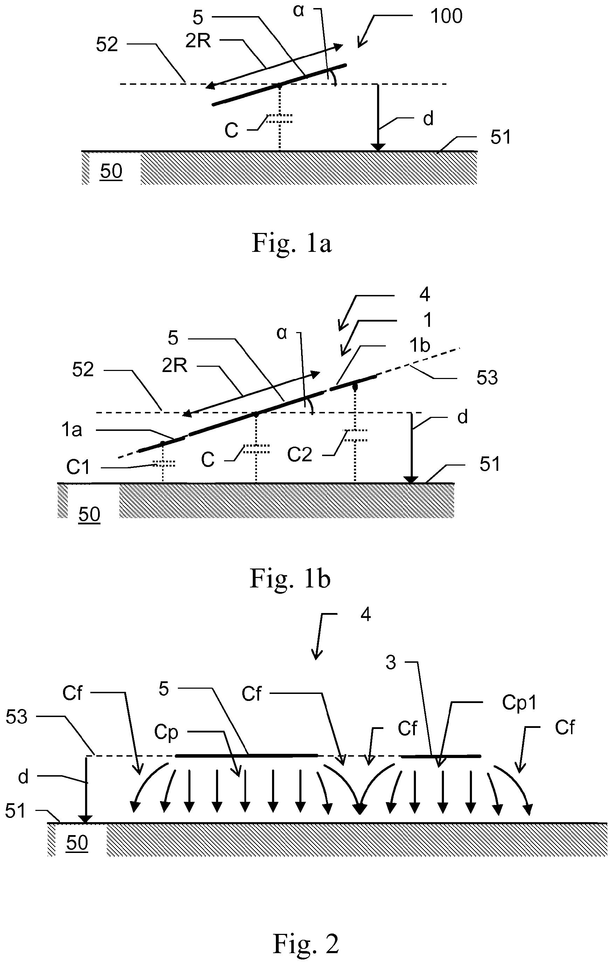

Die Fig.1a zeigt schematisch vereinfacht in Seitenansicht einen kapazitiven Distanzsensor 100 des Stands der Technik, wobei zur einfacheren Darstellung nur die wesentlichsten Bauteile gezeigt sind. Der Sensor 100 dient zur Messung des Abstands d zu einem Objekt 50 oder zur Messung des Spalts d zwischen dem Objekt 50 und einem zweiten, nicht dargestellten Objekt, an welchem der Distanzsensor 100 angebracht ist. Die beiden Objekte bzw. der Sensor 100 und das Objekt 50 sind dabei parallel zur Ebene 52 relativ zueinander verschiebbar. Beispielsweise handelt es sich bei den beiden Objekten um die beiden Teile eines Präzisionslagers, z.B. um die beiden Gleitflächen eines Luftlagers, welche translatorisch, z.B. linear, entlang der Richtung 52 verschiebbar sind und den Luftspalt d zueinander aufweisen. Alternativ (auch zur Darstellung) handelt es sich nicht um ein translatorisches Lager, sondern um ein Rotationslager, so dass die Ebene 52 gekrümmt ist und der Sensor 100 z.B. eine 360°-Drehbewegung entlang der Ebene ausführen kann. Präzisionslager werden z.B. in Präzisionsmessmaschinen wie Koordinatenmessgeräten, Totalstationen, Lasertracker oder Laserscannern verbaut wie auch in Roboterarmen oder CNC-Präzisionsfertigungsmaschinen.

Im Idealfall erfolgt die Relativbewegung stets parallel zueinander, d.h. der Abstand d ist idealerweise gleich bleibend (im linearen Fall gibt es idealerweise nur einen Freiheitsgrad für die Relativbewegung). In der Realität treten jedoch Abweichungen hiervon auf, d.h. die Grösse d der Lücke schwankt fertigungsbedingt über den Bewegungsspielraum (Verschiebeweg) oder auch hervorgerufen durch Umwelteinflüsse wie Temperaturänderungen oder Alterungsphänomene. Diese Abweichungen verfälschen z.B. im Falle eines Lagers einer Präzisionsmessmaschine das Messergebnis oder bei einer Fertigungsanlage die Genauigkeit des damit gefertigten Werkstücks. Um deshalb den Abstand d zu messen bzw. zu überwachen (z.B. in Form eines Lagermonitorings) und damit den Abstand d bzw. dessen Änderungen bzw. Abweichungen vom Soll- oder Idealabstand berücksichtigen bzw. kompensieren zu können, wird nun der kapazitive Distanzsensor 100 verwendet.

Der kapazitive Distanzsensor 100 weist eine flächige Sensorelektrode 5 mit der Länge oder dem Durchmesser 2R auf. Diese bildet mit der dazu beabstandeten (Ober-)Fläche eines Objekts 50 einen Kondensator bzw. Kapazität C. Die Grösse der Kapazität C hängt in bekannter Weise vom Abstand d ab. Somit kann über Messung der Kapazität C der Abstand d bestimmt werden.

Mit einem Sensor 100 des Stands der Technik sind allerdings dennoch Fehler möglich, da eine fehlerhafte Berücksichtigung oder Bestimmung des Abstands d erfolgt, falls die Ausrichtung der Sensorelektrode 5 zur Objektfläche 51 nicht parallel ist, sondern wie in Figur 1a dargestellt, eine Verkippung vorliegt und die beiden Flächen einen Winkel $\alpha$ miteinander einschliessen. Eine solche unerwünschte Neigung entsteht z.B. wiederum durch ungenaue Fertigung oder bedingt durch Umwelteinflüsse/Alterung.

Die tatsächliche Kapazität C ergibt sich dann nicht einfach nach $C \propto \dfrac{1}{d}$ , sondern gemäss:

$$C \propto \int_{-R}^{R} \frac{1}{d + \alpha \cdot x} dx = \frac{2}{\alpha} \operatorname{arctanh} \frac{\alpha \cdot R}{d} \qquad (1)$$

$$\approx \frac{2R}{d} + \frac{2}{3}\left(\frac{r}{d}\right)^{3} \alpha^{2} + O\left(\alpha^{3}\right)$$

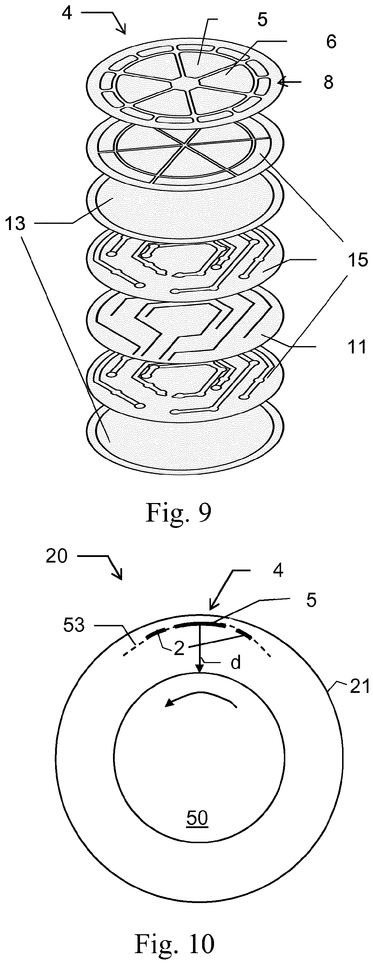

Figur 1b zeigt schematisch vereinfacht eine erste Ausführungsform eines erfindungsgemässen kapazitiven Distanzsensors 4, mit welchem eine etwaige Verkippung bzw. Abweichung von der Ideallage des Distanzsensors 4 bzw. der Sensorelektrode 5 kompensiert bzw. berücksichtigt werden kann. Der erfindungsgemässe Distanzsensor 4 weist hierzu der Sensorelektrode 2 eine zur Sensorelektrode 2 separate Neigungskompensationselektrode 1 auf, welche im Beispiel in zwei Teile 1a und 1b dergestalt aufgeteilt ist, so dass diese der Sensorelektrode 2 jeweils an einem Ende beigeordnet und von dieser separiert sind. Beide Elektroden 1, 2 liegen dabei in einer Ebene 53. Die Kompensationselektroden 1a und 1b bilden jeweils mit der Objektfläche 51 eine Kapazität C1 bzw. C2. Abweichend zur Darstellung sind auch je nach technischem Anwendungsgebiet Ausführungsformen möglich, in der die Ebene 53 leicht gekrümmt ist bzw. die Sensor- und Kompensationselektroden 1, 2, 3 leicht gekrümmt sind, so dass z.B. die drei Elektroden 1, 2, 3 einen Kreisbogen bilden. Derlei Ausführungsformen sind z.B. vorteilhaft zur Distanzbestimmung bei rotatorischen Relativbewegungen, z.B. zur Distanzbestimmung innerhalb eines Drehlagers (s. Figur 10) .

Die erste und zweite Kompensationselektrodeteile 1a, 1b bzw. die daraus gebildete Neigungskompensationselektrode 1 sind dabei dergestalt ausgebildet, dass gilt:

$$C - C_{1} - C_{2} \propto \approx \frac{2R}{d} + O\left(\alpha^{3}\right) \qquad (2)$$

Somit wird mit dem erfindungsgemässen Distanzsensor 4 die Neigung der Sensorelektrode 5 bzw. der Ebene 53 relativ zur Objektfläche 51 kompensiert, also ausgeglichen bzw. der Neigungswinkel $\alpha$ bestimmt und bei der Bestimmung des gesuchten Abstands d berücksichtigt.

Figur 2 zeigt schematisch vereinfacht dargestellt im Querschnitt eine zweite Ausführungsform eines erfindungsgemässen kapazitiven Distanzsensors 4 zur Messung der Distanz d zu einem Objekt 50. Neben den oben genannten Verfälschungen des Messergebnisses aufgrund Abweichungen von einer idealen parallelen Ausrichtung der Sensors 4 bzw. der Sensorelektrode 5 relativ zur Objektfläche 51 treten Abweichungen von der idealen Abhängigkeit $C \propto \dfrac{1}{d}$ auch durch kapazitive Randeffekte auf.

Da die Ausdehnung der Sensorelektrode 5 (entlang der Richtung 53) begrenzt ist, setzt sich deren gesamte Kapazität C neben der "idealen" Kapazität Cp des inneren Bereichs der Elektrode 5 auch aus elektrischen Feldern bzw. Kapazitäten Cf des Rands des Sensorelektrode 5 zusammen, so dass sich (gemäss der dargestellten zweidimensionalen Vereinfachung) ergibt:

$$C = C_p + 2C_f \qquad\qquad (3)$$

Zur Kompensation dieser Randeffekte weist nun der erfindungsgemässe Distanzsensor 4 neben der Sensorelektrode 5 eine Randeffektkompensationselektrode 3 auf, die in der gleichen Ebene 52 wie die Sensorelektrode 5 liegt und zu dieser beabstandet bzw. von dieser separiert ist. Die Kompensationselektrode 3 ist dabei so gewählt, dass sie zur Sensorelektrode 5 unterschiedliche Wirkfläche des inneren Bereichs, dabei aber gleichen Umfang aufweist. Mit anderen Worten ist die Länge der Umrandung beider Elektroden 5 und 3 gleich, aber deren Fläche ist ungleich. Damit differiert die Kapazität Cp1 des inneren Bereichs der Randeffektkompensationselektrode 3 von der "inneren" Kapazität Cp der Sensorelektrode 5, die Randkapazitäten Cf sind jedoch gleich. Damit lässt sich der kapazitive Beitrag der Elektrodenränder durch Differenzbildung der Gesamtkapazitäten von Sensorelektrode 5 und Kompensationselektrode 3 kompensieren bzw. wie folgt herausrechnen:

$$C = C_p + 2C_f - (C_{p1} + 2C_f) = C_p - C_{p1} \qquad\qquad (4)$$

Somit wird eine Gesamtkapazität C erhalten, die unabhängig von Randeffekten bzw. Randkapazitäten ist. Damit liegt vorteilhaft ein kapazitiver Sensor 4 vor, dessen ideales bzw. lineares Verhalten nicht von solchen Randeffekten gestört ist.

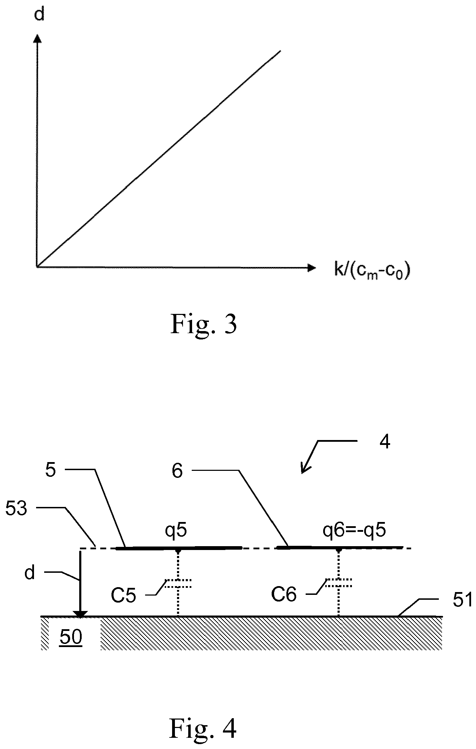

Figur 3 zeigt schematisch ein sich ergebendes lineares Verhalten eines erfindungsgemässen kapazitiven Distanzsensors aufgrund der oben beschriebenen Kompensation von Neigungsfehlern bzw. Abweichungen von der idealen parallelen Ausrichtung und von kapazitiven Randeffekten. Als Ergebnis der oben vorgeschlagenen Massnahmen der Beiordnung von wenigstens einer entsprechend ausgestalteten Kompensationselektrode hängt der gesuchte Abstand d linear von der gemessenen Kapazität c (bzw. deren Kehrwert) ab und dies über den gesamten Messbereich.

Insbesondere entfällt damit die Notwendigkeit von Look-Up-Tabellen zur Kalibrierung bzw. Fehlerbereinigung, welche nachteilig vergleichsweise rechenaufwändig und aufwändig im Hinblick auf eine Kalibrierung sind. Zur endgültigen Bestimmung des Distanzwerts d ist lediglich erforderlich, in einem Kalibriervorgang zwei Parameter k und c0 entsprechend nachfolgender Gleichung (5) zu bestimmen, was beispielsweise über die Messung der Sensorkapazitäten cm1 und cm2 bei lediglich zwei bekannten Distanzen d1 und d2 erfolgt. Aus dem Zusammenhang

$$d_1 = \frac{k}{c_{m1} - c_0}, d_2 = \frac{k}{c_{m2} - c_0} \qquad\qquad (5)$$

ergeben sich die Parameter k und c0 wie folgt:

$$k = \frac{d_1 \cdot d_2}{d_1 - d_2}(c_{m2} - c_{m1}) \qquad\qquad (6)$$

$$c_0 = \frac{1}{d_1 - d_2}(c_{m2} \cdot d_2 - c_{m1} \cdot d_1) \qquad\qquad (7)$$

Somit ermöglicht die vorliegende Erfindung vorteilhaft ein einfaches Kompensationsmodell, für das lediglich die beiden oben genannten Parameter bestimmt werden müssen, was auf sehr einfache Weise erfolgen kann.

Figur 4 zeigt schematisch vereinfacht dargestellt im Querschnitt eine Fortbildung eines erfindungsgemässen kapazitiven Distanzsensors 4. Dieser weist neben den erfindungsgemässen Kompensationselektroden wie oben beschrieben (in der Figur der übersichtlicheren Darstellung wegen weggelassen) eine zweite Sensorelektrode 6 auf. Vorzugsweise ist diese in der gleichen Ebene 53 wie die erste Sensorelektrode 5 angeordnet und entspricht auch sonst der ersten Sensorelektrode 5. Jedenfalls ist die zweite Sensorelektrode 6 dergestalt angeordnet und ausgeführt, dass die beiden Kapazitäten gleich sind, d.h. die Kapazität C1 der ersten Sensorelektrode 5 ist gleich der Kapazität C2 der zweiten Sensorelektrode 6: C5=C6.

Mittels der beiden Sensorelektroden 5 und 6 ist eine differentielle Kapazitätsmessung bzw. Messauswertung ermöglicht, wobei die Ladung q5 der ersten Sensorelektrode 5 jeweils gegengleich der Ladung q6 der zweiten Sensorelektrode 6 ist: q5=-q6. Somit ist die in der Gegenelektrode bzw. Gegenfläche 51 induzierte Ladung des relativ zu den Elektroden 5, 6 beweglichen oder gleitenden Objekts 50 insgesamt gleich Null: q5+q6=0. Durch die Ladungsneutralität der Gegenfläche wird die Messung zum einen unabhängig von den Impedanzverhältnissen der Gegenfläche. Zudem wird die gegenseitige Beeinflussung mehrerer auf dieselbe Gegenfläche messender Sensoren reduziert respektive eliminiert.

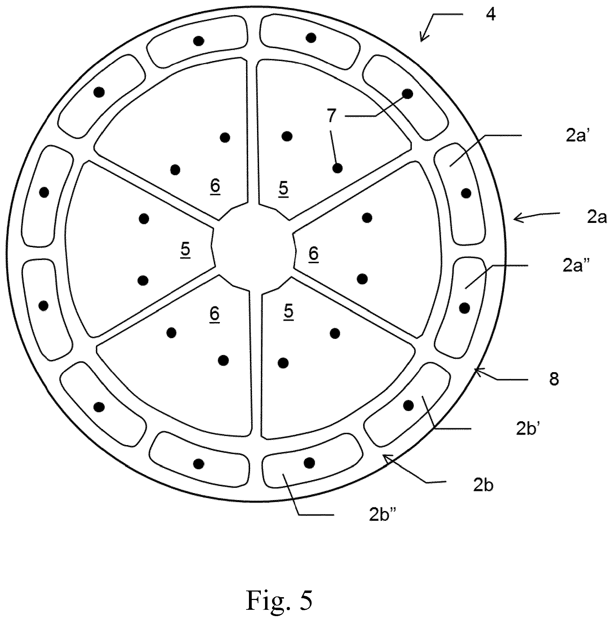

Figur 5 zeigt schematisch in Aufsicht eine bevorzugte Ausführungsform eines erfindungsgemässen kapazitiven Distanzsensors 4. Der Distanzsensor 4 weist eine erste flächige Sensorelektroden 5 und eine zweite flächige Sensorelektroden 6 zur differentiellen Kapazitätsmessung wie oben beschrieben auf. Die ersten und zweiten Sensorelektroden 5, 6 sind dabei jeweils in Form von drei geometrischen Elektroden bzw. drei miteinander elektrisch kontaktierte Elektrodenteilen abwechselnd und kreisförmig, in Form gleicher Kreissegmente, angeordnet. Mit einem solchen Distanzsensor 4 wird beispielsweise ein Messbereich im Mikrometerbereich abgedeckt, z.B. bis zu maximal 100 Mikrometern oder allenfalls 1000 Mikrometern, wobei eine Messgenauigkeit von weniger als einem Mikrometer erzielt wird.

Um die Sensorelektroden 5, 6 herum sind ringförmig Kompensationselektroden 2a, 2b angeordnet. Der Ring 8 der Kompensationselektroden 1, 3 ist dabei konzentrisch zur kreisförmigen Anordnung der Sensorelektroden 5, 6.

Die Kompensationselektroden 2a, 2b dienen dabei sowohl der Neigungskompensation wie zu den Figuren 1a und 1b beschrieben, als auch zur Kompensation kapazitiver Randeffekte wie zu Figur 2 beschrieben. Die Kompensationselektroden 2a, 2b erfüllen also eine Doppelfunktion. Sie sind dazu so gewählt, dass einerseits der Zusammenhang zwischen Sensorelektroden 5, 6 und Kompensationselektroden 2a, 2b sowohl im Sinne obiger Gleichung (2) erfüllt ist als auch im Sinne obiger Gleichung (4), wobei die Gleichungen (2), (4) vom oben dargestellten einfachen zweidimensionalen Fall für den dreidimensionalen Fall des vorliegenden Beispiels entsprechend adaptiert sind. Im Beispiel sind hierzu die Kompensationselektroden in zwölf (geometrische) Elektroden 2a', 2a", 2b', 2b" aufgeteilt, wobei jeweils zwei Teile 2a', 2a" bzw. 2b', 2b" einem Sensorelektrodenteil 5 oder 6 beigeordnet sind. Die Aufteilung in jeweils zwei Kompensationselektrodenteile 2a', 2a" bzw. 2b', 2b" (statt einer einzigen Elektrode) erfolgt, um den zur Kompensationsfunktion von Randeffekten erforderlichen Umfang bereitzustellen: der Umfang zweier Teile 2a', 2a" bzw. 2b', 2b" entspricht zusammen dem Umfang eines Sensorelektrodenteils 5 oder 6.

Insgesamt sind so jeder ersten oder zweiten Sensorelektrode 5 oder 6 drei mal zwei elektrische miteinander verbundene Kompensationselektroden 2a' und 2a" bzw. 2b' und 2b" beigeordnet, so dass letztlich zwei Kompensationselektroden 2a und 2b vorliegen, welche jeweils einer Sensorelektrode 5 oder 6 beigeordnet sind und sowohl Neigungseffekte als auch Randeffekte kompensieren.

Somit wird durch die jeweils vorliegenden Kapazitäten des Kompensationselektrodenrings 8, z.B. mittels Subtraktion von der jeweils vorliegenden inneren Sensorelektrodenkapazität, sowohl eine etwaige Abweichung von der idealen parallelen Ausrichtung des Sensors 4 zur Messfläche oder Objektoberfläche kompensiert als auch der Einfluss der Ränder der ersten und zweiten Sensorelektroden 5, 6.

Im Beispiel weisen die Elektroden 2a, 2b, 5, 6 Kontaktzonen 7, z.B. Kontaktbohrungen/Kontaktlöcher, auf zu deren elektrischen Kontaktierung. Um dabei auf einfache Weise die oben genannten Verhältnismässigkeiten der Sensorelektroden 5, 6 zu den Kompensationselektroden 2a, 2b im Hinblick auf die Kompensation bzw. Fehlereliminierung zu gewährleisten, weisen die Sensorelektroden 5, 6 zwei solcher Kontakte auf. Somit liegen gleiche Kontaktierungsverhältnisse für einen jeweiligen Bereich bzw. eine jeweilige elektrische Polung vor und die Kontaktflächen 7 müssen bei der Auswertung der gemessenen Kapazitäten nicht gesondert berücksichtigt werden.

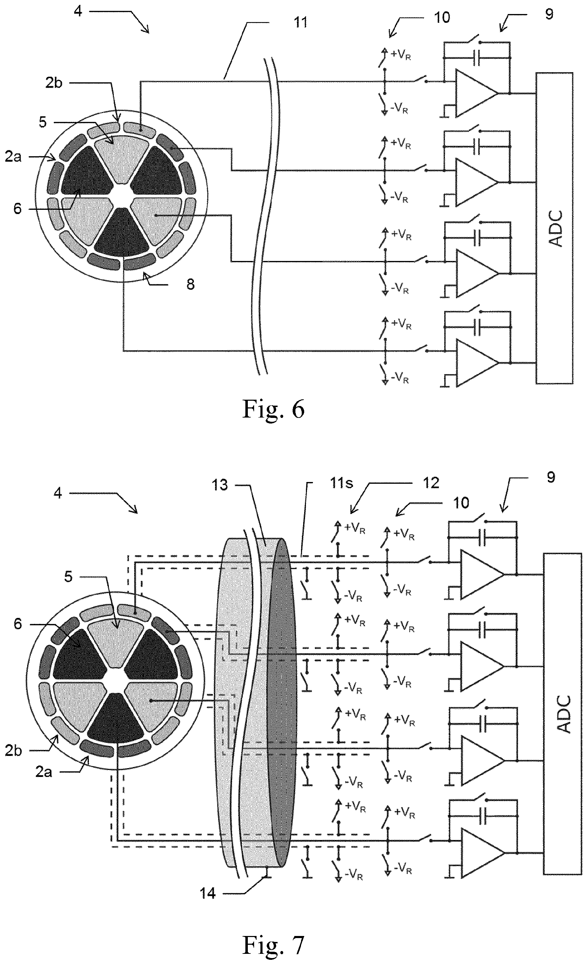

Figur 6 zeigt schematisch ein Beispiel für eine Auswerteschaltung eines erfindungsgemässen kapazitiven Distanzsensors 4 wie zuvor im Zusammenhang mit Figur 5 beschrieben. Mittels Verdrahtungen 11 sind jeweils die erste und die zweite Sensorelektrode 5, 6 als auch die beiden Kompensationselektroden 2a, 2b des Kompensationselektrodenrings 8 kontaktiert, so dass simultan vier dieser unabhängigen Elektroden mittels der Spannungsquellen 10 geladen und dann die jeweilige Ladung bzw. Kapazität dieser vier Elektroden 5, 6, 2a, 2b beispielsweise mittels eines Ladungsverstärkers bestimmbar ist.

Die Aufladung der jeweiligen Elektroden bzw. Kondensatoren erfolgt mittels der Spannungsquellen 10 mit entsprechend angebrachten elektronischen Schaltern, so dass jede Elektrode 5, 6, 2a, 2b mit der Spannung +VR oder -VR geladen wird. Die Kapazitätsmessung erfolgt über vier rücksetzbare analoge Integratoren 9, welche die kapazitiven Ladungen in Spannungswerte umwandeln. Diese Spannungen werden anschliessend von einem ADC-Wandler digitalisiert.

Figur 7 zeigt schematisch eine Fortbildung des erfindungsgemässen kapazitiven Distanzsensors 4 nach obiger Figur 6. Zusätzlich zu den vorgenannten Merkmalen weist der Distanzsensor 4 Abschirmungen 11s und 13 auf, welche die elektrischen Verbindungen zwischen Sensorelektroden 5, 6, 2a, 2bund Auswerteelektronik 9, ADC gegen äussere elektromagnetische Einflüsse abschirmen und so Rauschen der Messsignale reduzieren.

Zum einen werden elektrisch abgeschirmte Leitungen 11s verwendet. Diese sind, um parasitäre Kapazitäten zu vermeiden, mittels zusätzlicher Schalter bzw. Spannungsquellen 12 auf gleiches Potential +VR oder -VR wie die Sensorelektroden 5, 6, 2a, 2b geschaltet, so dass eine aktive Abschirmung vorliegt.

Zum anderen weist der Distanzsensor 4 optional eine zusätzliche passive Abschirmung 13 auf, welche auf einem fixen bzw. definierten elektrischen Potential 14 liegt. Damit werden die Kapazitätsmessung störende Einflüsse noch weiter vermindert. Im Beispiel ist dabei das passive Schild 13 so ausgeführt, dass damit alle elektrischen Anschlüsse auf einmal abgeschirmt werden. Alternativ hierzu kann der Distanzsensor 4 mehrere solche passive Abschirmungen 13 aufweisen, so dass z.B. jede Leitung 11s ihre eigene Abschirmung 13 aufweist.

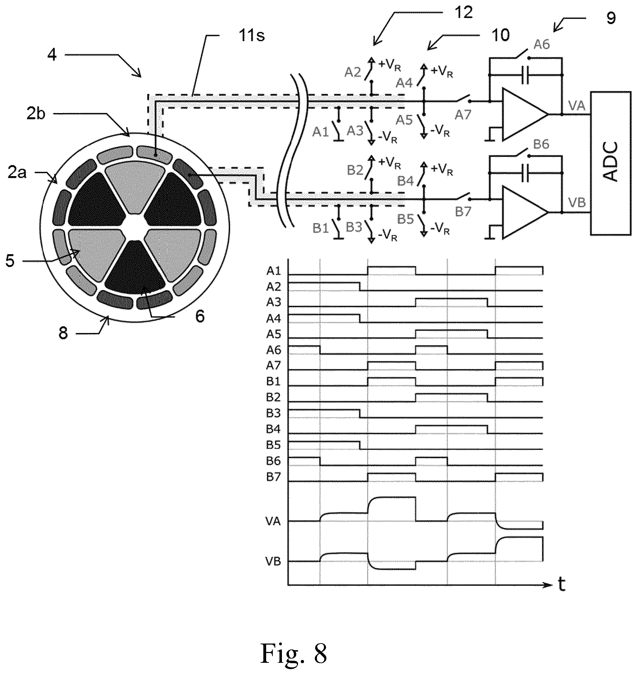

Figur 8 zeigt schematisch ein Beispiel für eine Schaltsequenz eines erfindungsgemässen kapazitiven Distanzsensors 4 mit aktiver Abschirmung gemäss voriger Figur 7, wobei der einfacheren Darstellung wegen nur die Schaltung zum Kompensationselektrodenring 8 dargestellt ist. Bezüglich des Auslesevorgangs können die (inneren) ersten und zweiten Sensorelektroden 5, 6 und der äussere Ring 8 aus Kompensationselektroden 2a, 2b wie zwei voneinander unabhängige kapazitive Sensoren behandelt werden.

Die Figur 8 zeigt oben die elektrische Schaltung mit Leitungen 11s, Potentialgebern 10 und 12 und Integratoren 9, die die Ausgangssignale VA und VB liefern, wobei die erforderlichen Schalter mit A1-A7 und B1-B7 bezeichnet sind. Darunter sind auszugsweise eine Schaltsequenz dieser Schalter A1-A7 und B1-B7 sowie die resultierenden Ausgangsspannungen VA und VB in qualitativer Art dargestellt. Zu erkennen ist u.a., dass die Elektroden mit gegensätzlicher Polarität angeregt werden, so dass ein differentieller Messvorgang ermöglicht ist. Zudem werden die Schalter derart gehandhabt, dass Ladungseffekte, welche durch Abweichungen von theoretischen oder idealen Schaltvorgängen erzeugt werden, in einem post-processing kompensierbar sind (Correlated double sampling).

Figur 9 zeigt in einer auseinandergezogenen Schrägansicht eine bevorzugte Ausführungsform eines erfindungsgemässen kapazitiven Distanzsensors 4. Der zylindrische Distanzsensor 4 weist "oben" die eigentliche wirksame Kreisfläche mit den ersten und zweiten Sensorelektroden 5, 6 und dem Ring 8 der Kompensationselektroden auf (vgl. Figur 5). Zur Abschirmung dienen insgesamt drei (Lagen) aktiver Abschirmelektroden 15 und zwei (Lagen) mit passiver Abschirmung 13. Diese folgen abwechselnd aufeinander, wobei sich eine Leiterschicht 11 zur Kontaktierung des Sensor- und Kompensationselektroden 5, 6, 8 direkt zwischen zwei Schichten aktiver Abschirmung 15 befindet. Durch die Anordnung der "obersten" Schicht mit den Sensor- und Kompensationselektroden 5, 6, 8 und der Leiterschicht 11 angrenzend nur an Schichten aktiver Abschirmung 15 werden vorteilhaft Temperatureffekte mit Ausdehnung des Trägers (printed circuit board) minimiert. Der vorliegende Aufbau ermöglicht zudem eine kompakte Bauform bei weitestgehender Abschirmung störender elektrischer Felder.

Figur 10 zeigt schematisch im Querschnitt bzw. in Aufsicht ein Beispiel für die Anwendung eines erfindungsgemässen Distanzsensors 4 in einem Präzisionslager 20. Bei dem Lager 20 handelt es sich um ein Drehlager. Der Sensor 4 dient zur Überwachung des Abstands d zwischen dem Innenring 50 und Aussenring 21 des Lagers 20. Erfindungsgemäss weist der Sensor 4 neben der Hauptelektrode 5, welche mit dem gegenüberliegenden Innenring 50 eine Kapazität bildet, eine in zwei Teile aufgeteilte Kompensationselektrode 2 auf, welche mit dem Innenring 50 eine weitere Kapazität bildet. Die Elektrode 2 ist dabei von der Sensorelektrode 5 separiert und dieser derart beigeordnet, dass die beiden Elektroden 2, 5 bzw. die drei eine gekrümmte Ebene 53 bilden. Die Kompensationselektrode 2 ist dabei gemäss oben dargelegter Prinzipien dergestalt ausgebildet, dass anhand der Kompensationskapazität der Kompensationselektrode 2 sowohl Abweichungen des Sensors 4 von einer Ideallage als auch Randeffekte der Sensorelektrode 5 kompensierbar sind, so dass der Abstand d hochpräzise überwacht werden kann.

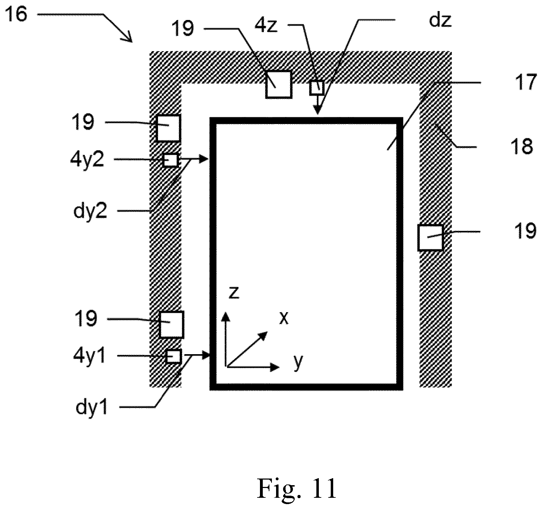

Figur 11 zeigt schematisch eine Seitenansicht eines Präzisionslager-Systems 16 einer Linearachse x, welches mit erfindungsgemässen kapazitiven Distanzsensoren 4z ,4y1, 4y2 ausgestattet ist. Bei dem Präzisionslager 16 handelt es sich im Beispiel um ein Luftlager, welches z.B. im Linearantrieb einer Portalkoordinatenmessmaschine oder CNC-Maschine Verwendung findet.

Dargestellt ist eine rechteckige Balkenstruktur, welche als Führung 17 in Richtung x der gewünschten linearen Verschiebebewegung dient. Das zum Objekt 17 verschiebbare Objekt ist der zur Bewegung in x-Richtung vorgesehen Träger 18. Dieser wird durch Luftpolster erzeugende Druckluftöffnungen 19 beabstandet zur Führung 17 gestützt, so dass eine näherungsweise reibungsfreie Bewegung möglich ist.

Die in einer jeweiligen x-Position vorliegende Beabstandung bzw. Distanz der beiden Objekte 17 und 18 in z-Richtung (dz) und y-Richtung (dy1, dy2) beeinflusst dabei im Falle einer Anwendung in einer CMM die zu bestimmende 3D-Koordinate des zu vermessenden Werkstücks, das sich auf dem Messtisch befindet; die Abstände liegen beispielsweise in der Grössenordnung von einige Mikrometern bis 100 Mikrometern oder maximal 1000 Mikrometern. Um Abweichungen von den Sollabständen bzw. Idealabständen zu kompensieren oder den jeweilig vorliegenden Abstand dz und dy1, dy2 zu bestimmen, beispielsweise mit Nanometerpräzession, und bei der Berechnung der 3D-Koordinate mit einzubeziehen, weist das Lager 16 im Beispiel drei erfindungsgemässe kapazitive Distanzsensoren 4z, 4y1, 4y2 auf, welche am oder im Träger 18 angebracht sind und den zur Bewegungsrichtung x senkrechten Abstand dz und dy1, dy2 zur Führung 17 fortlaufend oder kontinuierlich messen bzw. in Echtzeit oder in-situ überwachen, also auch während der Relativbewegung der beiden Objekte 17 und 18 zueinander. So können z.B. die Abstände dz und dy1, dy2 bei einer jeden 3D-Koordinatenerfassung mitbestimmt werden oder mit einer bestimmten Messfrequenz während der ganzen Messprozedur oder des gesamten Herstellungsvorgangs des Werkstücks aufgenommen werden. Somit kann vorteilhaft die Präzision der Messung oder Fertigung z.B. einer Koordinatenmessmaschine oder Fertigungsmaschine, in die das Lager-System 16 verbaut ist, auch bei widrigen Umwelteinflüssen wie Temperaturschwankungen oder Vibrationen oder aufgrund ungenauer Fertigung des Lagers 16 erhalten werden bzw. die Anforderungen an Fertigungstoleranzen des Lagers 16 gesenkt werden; dies besonders auch dadurch, dass aufgrund der erfindungsgemässen Neigungskompensation (s. Figur 1b) des kapazitiven Distanzsensors 4z, 4y1, 4y2 selbst dessen Einbau an bzw. im Träger 18 mit vergleichsweise grosser Toleranz erfolgen kann.

Die gemessenen Distanzen dy1, dy2 und dz dienen somit zur präzisen Positionsbestimmung des Trägers 18 bzw. Überwachung von dessen Positionierungsgenauigkeit. Etwaige Abweichungen in y-Richtung und z-Richtung können somit festgestellt und kompensiert werden.

Darüber hinaus werden mittels der zwei kapazitiven entlang der z-Richtung montierten Distanzsensoren 4y1, 4y2 zudem weitere Abweichungen des linearen Lagers 16 festgestellt und kompensiert. Mittels der beiden Sensoren 4y1, 4y2 entlang der z-Achse werden Verdrehung wie rolling-Fehler um die x-Achse beobachtet und kompensiert. Als weitere, nicht dargestellte Option weist das Lager weitere zusätzliche Distanzsensoren auf, z.B. in x-Richtung beabstandet am Träger 18 montiert, welche zur Kompensation weiterer Fehler (pitching, yawing) bzw. zur weiteren Steigerung der Präzision dienen.

Es versteht sich, dass diese dargestellten Figuren nur mögliche Ausführungsbeispiele schematisch darstellen.

Die Erfindung ist ausschließlich durch die beiliegenden Ansprüchen definiert.

## Patentansprüche

1. Kapazitiver Distanzsensor (4, 4y1, 4y2, 4z) zur Messung einer Distanz (d, dy1, dy2, dz) zu einem Objekt (17, 50), insbesondere mit einer Genauigkeit im Submikrometerbereich bis Mikrometerbereich, wobei der Distanzsensor (4, 4y1, 4y2, 4z) wenigstens eine erste flächige Sensorelektrode (5), wenigstens eine der ersten Sensorelektrode beigeordnete separate Neigungskompensationselektrode (1, 2, 2a, 2b) und eine Steuer- und Auswerteeinheit zum Bestimmen der Distanz basierend auf einer Kapazitätsmessung aufweist, wobei die Sensorelektrode (5) ausgebildet ist, mit einer gegenüberliegenden Fläche (51) des Objekts (17, 50) eine von der Distanz (d, dy1, dy2, dz) abhängige Kapazität zu bilden, wobei die Sensorelektrode (5) und die Neigungskompensationselektrode (1, 2, 2a, 2b) in einer Ebene (53) liegen, so dass anhand der Kapazität der Neigungskompensationselektrode (1, 2, 2a, 2b) durch Differenzbildung der gemessenen Kapazitäten von erster Sensorelektrode (5) und Neigungskompensationselektrode (1, 2, 2a, 2b) Messfehler der Distanzbestimmung mittels der Steuer- und Auswerteeinheit kompensiert werden, welche durch Abweichungen von einer idealen Parallelität von Sensorelektrode (5) und gegenüberliegender Objektfläche (51) bedingt sind.

2. Kapazitiver Distanzsensor (4, 4y1, 4y2, 4z) zur Messung der Distanz zu einem Objekt(17, 50), insbesondere mit einer Genauigkeit im Submikrometerbereich, wobei der Distanzsensor (4, 4y1, 4y2, 4z) wenigstens eine erste flächige Sensorelektrode (5), eine der ersten Sensorelektrode beigeordnete separate Randeffektkompensationselektrode (3, 2, 2a, 2b) und eine Steuer- und Auswerteeinheit zum Bestimmen der Distanz basierend auf eine Kapazitätsmessung aufweist, wobei die Sensorelektrode (5) ausgebildet ist, mit einer gegenüberliegenden Fläche (51) des Objekts (17, 50) eine von der Distanz (d, dy1, dy2, dz) abhängige Kapazität zu bilden, wobei die erste Sensorelektrode (5) und die Randeffektkompensationselektrode (3, 2, 2a, 2b) in einer Ebene (53) liegen und gleichen Umfang bei unterschiedlicher Fläche aufweisen, so dass anhand der Kapazität der Randeffektkompensationselektrode (3, 2, 2a, 2b) durch Differenzbildung der gemessenen Kapazitäten von erster Sensorelektrode (5) und Randeffektkompensationselektrode (3, 2, 2a, 2b) Messfehler der Distanzbestimmung mittels der Steuer- und Auswerteeinheit kompensiert werden, welche durch kapazitive Randeffekte der ersten Sensorelektrode (5) bedingt sind.

3. Kapazitiver Distanzsensor (4, 4y1, 4y2, 4z) nach einem der Ansprüche 1 oder 2,
   **dadurch gekennzeichnet, dass**
   die Neigungskompensationselektrode (2, 2a, 2b) auch zur Kompensation kapazitiver Randeffekte ausgebildet ist oder die Randeffektkompensationselektrode (2, 2a, 2b) auch zur Kompensation von Abweichungen von einer idealen Parallelität ausgebildet ist.

4. Kapazitiver Distanzsensor (4, 4y1, 4y2, 4z) nach einem der vorherigen Ansprüche,
   **dadurch gekennzeichnet, dass**
   der Distanzsensor (4, 4y1, 4y2, 4z) wenigstens eine zweite flächige Sensorelektrode (6) aufweist, welche im Vergleich zur ersten Sensorelektrode (5) gleiche Kapazität aufweist und elektrisch gegengleich ansprechbar ist, so dass die Distanz (d, dy1, dy2, dz) basierend auf einer differentiellen Kapazitätsmessung mit Hilfe der beiden Sensorelektroden (5, 6) bestimmbar ist, insbesondere wobei der zweiten Sensorelektrode (6) ebenfalls wenigstens eine Neigungskompensationselektrode und/oder Randeffektkompensationselektrode (1, 2, 2a, 2b, 3) beigeordnet ist.

5. Kapazitiver Distanzsensor (4, 4y1, 4y2, 4z) nach Anspruch 4,

**dadurch gekennzeichnet, dass**

der Distanzsensor (4, 4y1, 4y2, 4z) wenigstens zwei Kompensationselektroden (1, 2, 2a, 2b, 3) und vier Integratoren (9) aufweist, so dass simultan jeweils eine erste und eine zweite Sensorelektrode (5, 6) und zwei Kompensationselektroden (1, 2, 2a, 2b, 3) auslesbar sind.

6. Kapazitiver Distanzsensor (4, 4y1, 4y2, 4z) nach Anspruch 4 oder 5,
   **dadurch gekennzeichnet, dass**
   alle Sensorelektroden (5, 6) und Kompensationselektroden (1, 2, 2a, 2b, 3) zusammen eine kreisförmige und in der Ebene (53) symmetrische Anordnung bilden, wobei die Sensorelektroden (5, 6) Kreissegmente bilden und die Kompensationselektroden (1, 2, 2a, 2b, 3) aussenliegend konzentrisch um die Sensorelektroden (5, 6) angeordnet sind.

7. Kapazitiver Distanzsensor (4, 4y1, 4y2, 4z) nach einem der vorherigen Ansprüche,
   **dadurch gekennzeichnet, dass**
   die Sensorelektroden und die Kompensationselektroden (5, 6, 1, 2, 2a, 2b, 3) Kontaktlöcher (7) zur elektrischen Kontaktierung aufweisen und die Anzahl an Kontaktlöchern (7) der Kompensationselektroden (1, 2, 2a, 2b, 3) der Anzahl an Kontaktlöchern (7) der Sensorelektroden (5, 6) entspricht, wobei alle Sensorelektroden (5, 6) gleiche Anzahl an Kontaktlöchern (7) aufweisen.

8. Kapazitiver Distanzsensor (4, 4y1, 4y2, 4z) nach einem der vorherigen Ansprüche,
   **dadurch gekennzeichnet, dass**
   der Distanzsensor (4, 4y1, 4y2, 4z) zur elektrischen Kontaktierung der Sensorelektroden (5, 6) und/oder Kompensationselektroden (1, 2, 2a, 2b, 3) elektrisch abgeschirmte Leitungen (11s) aufweist, wobei die Leitungen (11s) auf gleiches elektrisches Potential wie die jeweilige Sensorelektroden (5, 6)- und/oder Kompensationselektroden (1, 2, 2a, 2b, 3) schaltbar sind und/oder der Distanzsensor wenigstens eine passive elektrische Abschirmelektrode (13) auf fix definiertem elektrischem Potential (14) aufweist.

9. Kapazitiver Distanzsensor (4, 4y1, 4y2, 4z) nach einem der vorherigen Ansprüche,
   **dadurch gekennzeichnet, dass**
   der Distanzsensor (4, 4y1, 4y2, 4z) zur fortlaufenden Echtzeitmessung der Distanz (d, dy1, dy2, dz) zum Objekt (17, 50) ausgebildet ist und/oder mittels der Kompensierbarkeit ein lineares Ansprechverhalten aufweist.

10. Präzisionslager (16), insbesondere Gleitlager, Luftlager, Magnetlager oder Wälzlager, mit zwei relativ zueinander beweglichen Teilen (17, 18),
    **dadurch gekennzeichnet, dass**
    das Präzisionslager (16) wenigstens einen kapazitiven Distanzsensor (4, 4y1, 4y2, 4z) nach Anspruch 1 oder 2 zur Messung, insbesondere Echtzeitmessung, mindestens eines Abstands (d, dy1, dy2, dz) zwischen den zwei beweglichen Teilen (17, 18) aufweist.

11. Präzisionslager (16) nach Anspruch 10,
    **dadurch gekennzeichnet, dass**
    das Präzisionslager (16) wenigstens zwei zueinander beabstandet angeordnete kapazitive Distanzsensoren (4y1, 4y2) aufweist, so dass eine Abweichung von einer idealen Parallelität der beiden beweglichen Teile (17, 18) zueinander kompensierbar ist.

12. Präzisionslager (16) nach Anspruch 10 oder 11,
    **dadurch gekennzeichnet, dass**
    das Präzisionslager (16) als Translationslager ausgebildet ist, insbesondere wobei es sich um ein Linearlager (16) handelt, welches in einer zur Linearachse (x) senkrechten Achse (y) wenigstens zwei zueinander beabstandet angeordnete kapazitive Distanzsensoren (4y1, 4y2) aufweist, so dass Verdrehungen um die Linearachse (X) kompensierbar sind.

13. Präzisionslager (16) nach einem der Ansprüche 10 bis 12,
    **dadurch gekennzeichnet, dass**
    das Präzisionslager (16) zur Verwendung in einem Präzisionsmessgerät, insbesondere einer Koordinatenmessmaschine, Theodolit, Laserscanner oder Lasertracker, und/oder einer Präzisionsbearbeitungsmaschine und/oder einem Präzisionsgelenkarm, vorgesehen ist.

14. Verfahren zum fortlaufenden Bestimmen eines Abstands (d, dy1, dy2, dz) zwischen zwei Maschinenteilen (17, 18), welche vorgesehen sind zum parallelen, insbesondere translatorischen, im Speziellen linearen, Verschieben relativ zueinander entlang einer definierten Führungsrichtung (x), insbesondere mit einem Sollabstand von maximal 1000 Mikrometern,

    **dadurch gekennzeichnet, dass**

    zum fortlaufenden Bestimmen des Abstands (d, dy1, dy2, dz) ein kapazitiver Distanzsensor (4, 4y1, 4y2, 4z) nach Anspruch 1 oder 2 verwendet wird.

15. Computerprogrammprodukt, das auf einem maschinenlesbaren Träger gespeichert ist, oder Computerdatensignal, verkörpert durch eine elektromagnetische Welle, mit Programmcode, der geeignet ist zur Durchführung des Verfahrens nach Anspruch 14, wobei das Computerprogrammprodukt vorgesehen ist zur Ausführung auf einer Steuer- und Auswerteeinheit eines kapazitiven Distanzsensors (4, 4y1, 4y2, 4z) nach Anspruch 1 oder 2.

**Claims**

1. A capacitive distance sensor (4, 4y1, 4y2, 4z) for measuring the distance (d, dy1, dy2, dz) to an object (17, 50), in particular with an accuracy in the sub-micrometer range to micrometer range, wherein the distance sensor (4, 4y1, 4y2, 4z) has at least one first planar sensor electrode (5), at least one separate tilt compensation electrode (1, 2, 2a, 2b) assigned to the first sensor electrode (5) and a control and evaluation unit for determining the distance based on a capacitance measurement, wherein the sensor electrode (5) is designed, together with an opposite area (51) of the object (17, 50), to form a capacitance dependent on the distance (d, dy1, dy2, dz), wherein the sensor electrode (5) and the tilt compensation electrode (1, 2, 2a, 2b) lie in a plane (53), and therefore measurement errors of the distance measurement which are caused by deviations from an ideal parallelism of sensor electrode (5) and opposite object area (51) are compensated by means of the control and evaluation unit on the basis of the capacitance of the tilt compensation electrode (1, 2, 2a, 2b) by forming a difference between the measured capacitances of the first sensor electrode (5) and the tilt compensation electrode (1, 2, 2a, 2b).

2. A capacitive distance sensor (4, 4y1, 4y2, 4z) for measuring the distance to an object (17, 50) (in particular) with an accuracy in the sub-micrometer range, wherein the distance sensor (4, 4y1, 4y2, 4z) has at least one first planar sensor electrode (5), at least one separate edge effect compensation electrode (3, 2, 2a, 2b) assigned to the first sensor electrode (5) and a control and evaluation unit for determining the distance based on a capacitance measurement, wherein the sensor electrode (5) is designed, together with an opposite area (51) of the object (17, 50), to form a capacitance dependent on the distance (d, dy1, dy2, dz), wherein the first sensor electrode (5) and the edge effect compensation electrode (3, 2, 2a, 2b) lie in a plane (53) and have the same circumference with different area, such that measurement errors of the distance measurement which are caused by capacitive edge effects of the first sensor electrode (5) are compensated by means of the control and evaluation unit on the basis of the capacitance of the edge effect compensation electrode (3, 2, 2a, 2b) by forming a difference between the measured capacitances of the first sensor electrode (5) and the edge effect compensation electrode (3, 2, 2a, 2b).

3. The capacitive distance sensor (4, 4y1, 4y2, 4z) according to either one of claim 1 or 2,
    **characterized in that**
    the tilt compensation electrode (2, 2a, 2b) is also designed for the compensation of capacitive edge effects, or the edge effect compensation electrode (2, 2a, 2b) is also designed for the compensation of deviations from an ideal parallelism.

4. The capacitive distance sensor (4, 4y1, 4y2, 4z) according to any one of the preceding claims,
    **characterized in that**
    the distance sensor (4, 4y1, 4y2, 4z) has at least one second planar sensor electrode (6) which in comparison to the first sensor electrode (5) has the same capacitance and is electrically responsive identically but oppositely, such that the distance (d, dy1, dy2, dz) can be determined with the aid of the two sensor electrodes (5, 6) on the basis of a differential capacitance measurement, in particular wherein the second sensor electrode (6) is also assigned at least one tilt compensation electrode and/or edge effect compensation electrode (1, 2, 2a, 2b, 3).

5. The capacitive distance sensor (4, 4y1, 4y2, 4z) according to claim 4,
    **characterized in that**
    the distance sensor (4, 4y1, 4y2, 4z) has at least two compensation electrodes (1, 2, 2a, 2b, 3) and four integrators (9), such that in each case a first and a second sensor electrode (5, 6) and two compensation electrodes (1, 2, 2a, 2b, 3) can be read simultaneously.

6. The capacitive distance sensor (4, 4y1, 4y2, 4z) according to claim 4 or 5,
   **characterized in that**
   all sensor electrodes (5, 6) and compensation electrodes (1, 2, 2a, 2b, 3) together form a circular arrangement which is symmetrical in the plane (53), wherein the sensor electrodes (5, 6) form circle segments and the compensation electrodes (1, 2, 2a, 2b, 3) are arranged externally, concentrically around the sensor electrodes (5, 6).

7. The capacitive distance sensor (4, 4y1, 4y2, 4z) according to any one of the preceding claims,
   **characterized in that**
   the sensor electrodes and the compensation electrodes (5, 6, 1, 2, 2a, 2b, 3) have contact holes (7) for electrical contacting and the number of contact holes (7) in the compensation electrodes (1, 2, 2a, 2b, 3) is equal to the number of contact holes (7) in the sensor electrodes (5, 6), wherein all sensor electrodes (5, 6) have the same number of contact holes (7).

8. The capacitive distance sensor (4, 4y1, 4y2, 4z) according to any one of the preceding claims,
   **characterized in that**
   the distance sensor (4, 4y1, 4y2, 4z) has electrically shielded lines (11s) for electrically contacting the sensor electrodes (5, 6) and/or compensation electrodes (1, 2, 2a, 2b, 3), wherein the lines (11s) can be switched to the same electrical potential as the sensor electrodes (5, 6) and/or compensation electrodes (1, 2, 2a, 2b, 3) in question and/or the distance sensor has at least one passive electrical shielding electrode (13) at a fixedly defined electrical potential (14).

9. The capacitive distance sensor (4, 4y1, 4y2, 4z) according to any one of the preceding claims,
   **characterized in that**
   the distance sensor (4, 4y1, 4y2, 4z) is designed for continuous real-time measurement of the distance (d, dy1, dy2, dz) from the object (17, 50) and/or has a linear response behavior by means of the compensability.

10. A precision bearing (16), in particular a plain bearing, air bearing, magnetic bearing or rolling bearing, with two parts (17, 18) movable relative to one another,
    **characterized in that**
    the precision bearing has at least one capacitive distance sensor (4, 4y1, 4y2, 4z) according to claim 1 or 2 for measuring, in particular in real time, at least one distance (d, dy1, dy2, dz) between the two movable parts (17, 18).

11. The precision bearing(16) according to claim 10,
    **characterized in that**
    the precision bearing (16) has at least two capacitive distance sensors (4y1, 4y2) arranged at a distance from one another, such that a deviation from an ideal parallelism of the two movable parts (17, 18) relative to one another can be compensated.

12. The precision bearing (16) according to claim 10 or 11,
    **characterized in that**
    the precision bearing (16) is designed as a translation bearing, in particular wherein the bearing is a linear bearing (16), which has at least two capacitive distance sensors (4y1, 4y2) arranged at a distance from one another in an axis (y) perpendicular to the linear axis (x), such that rotations about the linear axis (X) can be compensated.

13. The precision bearing (16) according to any one of claims 10 to 12,
    **characterized in that**
    the precision bearing (16) is intended for use in a high-precision meter, in particular a coordinate measuring machine, theodolite, laser scanner or laser tracker, and/or a precision machine tool and/or a precision articulated arm.

14. A method for continuously determining the distance (d, dy1, dy2, dz) between two machine parts (17, 18), which are intended for parallel displacement relative to one another, in particular in translation, especially linear displacement, along a defined guide direction (x), in particular with a target distance of at most 1000 micrometers,
    **characterized in that**
    a capacitive distance sensor (4, 4y1, 4y2, 4z) according to claim 1 or 2 is used to continuously determine the distance (d, dy1, dy2, dz).

15. A computer program product which is stored on a machine-readable carrier, or computer data signal, embodied by an electromagnetic wave, with program code, which is suitable for carrying out the method according to claim 14, wherein the computer program product is intended to be run on a control and evaluation unit of a capacitive distance sensor (4, 4y1, 4y2, 4z) according to claim 1 or 2.

## Revendications

1. Capteur capacitif de distance (4, 4y1, 4y2, 4z) pour mesurer une distance (d, dy1, dy2, dz) avec un objet (17, 50), en particulier avec une précision de l'ordre inférieur au micron jusqu'au micron, le capteur capacitif de distance (4, 4y1, 4y2, 4z) présentant au moins une première électrode de capteur plate (5), au moins une électrode de compensation d'inclinaison (1, 2, 2a, 2b) séparée, coordonnée à la première électrode de capteur et une unité de commande et d'évaluation pour déterminer la distance sur la base d'une mesure de capacité, l'électrode de capteur (5) étant configurée pour former avec une surface opposée (51) de l'objet (17, 50) une capacité qui dépend de la distance (d, dy1, dy2, dz), l'électrode de capteur (5) et l'électrode de compensation d'inclinaison (1, 2, 2a, 2b) se situant dans un plan (53) si bien que des erreurs de mesure de la détermination de distance sont compensées par l'unité de commande et d'évaluation à l'aide de la capacité de l'électrode de compensation d'inclinaison (1, 2, 2a, 2b) en formant la différence des capacités de la première électrode de capteur (5) et de l'électrode de compensation d'inclinaison (1, 2, 2a, 2b), erreurs qui sont dues à des écarts d'un parallélisme idéal de l'électrode de capteur (5) et de la surface d'objet opposée (51).

2. Capteur capacitif de distance (4, 4y1, 4y2, 4z) pour mesurer la distance avec un objet (17, 50), en particulier avec une précision de l'ordre inférieur au micron, le capteur de distance (4, 4y1, 4y2, 4z) présentant au moins une première électrode de capteur plate (5), une électrode de compensation d'effet de bord (3, 2, 2a, 2b) séparée, coordonnée à l'une des premières électrodes de capteur et une unité de commande et d'évaluation pour déterminer la distance sur la base d'une mesure de capacité, l'électrode de capteur (5) étant configurée pour former avec une surface opposée (51) de l'objet (17, 50) une capacité qui dépend de la distance (d, dy1, dy2, dz), la première électrode de capteur (5) et l'électrode de compensation d'effet de bord (3, 2, 2a, 2b) se situant dans un plan (53) et présentant la même circonférence pour une surface différente si bien que des erreurs de mesure de la détermination de distance sont compensées par l'unité de commande et d'évaluation à l'aide de la capacité de l'électrode de compensation d'effet de bord (3, 2, 2a, 2b) en formant la différence des capacités de la première électrode de capteur (5) et de l'électrode de compensation d'effet de bord (3, 2, 2a, 2b), erreurs qui sont dues à des effets de bord capacitifs de la première électrode de capteur (5).

3. Capteur capacitif de distance (4, 4y1, 4y2, 4z) selon l'une des revendications 1 ou 2, **caractérisé en ce que** l'électrode de compensation d'inclinaison (2, 2a, 2b) est également configurée pour la compensation d'effets de bord capacitifs ou que l'électrode de compensation d'effet de bord (2, 2a, 2b) est également configurée pour la compensation d'écarts d'un parallélisme idéal.

4. Capteur capacitif de distance (4, 4y1, 4y2, 4z) selon l'une des revendications précédentes, **caractérisé en ce que** le capteur capacitif de distance (4, 4y1, 4y2, 4z) présente au moins une seconde électrode de capteur plate (6) qui présente, par comparaison avec la première électrode de capteur (5) la même capacité et qui peut réagir électriquement en sens inverse si bien que la distance (d, dy1, dy2, dz) peut être déterminée sur la base d'une mesure de capacité différentielle à l'aide des deux électrodes de capteur (5, 6), en particulier au moins une électrode de compensation d'inclinaison et/ou une électrode de compensation d'effet de bord (1, 2, 2a, 2b, 3) étant également coordonnée à la seconde électrode de capteur (6).

5. Capteur capacitif de distance (4, 4y1, 4y2, 4z) selon la revendication 4, **caractérisé en ce que** le capteur capacitif de distance (4, 4y1, 4y2, 4z) présente au moins deux électrodes de compensation (1, 2, 2a, 2b, 3) et quatre intégrateurs (9) si bien qu'une première et une seconde électrode de capteur (5, 6) et deux électrodes de compensation (1, 2, 2a, 2b, 3) peuvent lues respectivement simultanément.

6. Capteur capacitif de distance (4, 4y1, 4y2, 4z) selon la revendication 4 ou 5, **caractérisé en ce que** toutes les électrodes de capteur (5, 6) et électrodes de compensation (1, 2, 2a, 2b, 3) forment ensemble un arrangement circulaire et symétrique dans le plan (53), les électrodes de capteur (5, 6) formant des segments de cercle et les électrodes de compensation (1, 2, 2a, 2b, 3) étant placées à l'extérieur de manière concentrique autour des électrodes de capteur (5, 6).

7. Capteur capacitif de distance (4, 4y1, 4y2, 4z) selon l'une des revendications précédentes, **caractérisé en ce que** les électrodes de capteur et les électrodes de compensation (5, 6, 1, 2, 2a, 2b, 3) présentent des trous de contact (7) pour la mise en contact électrique et le nombre de trous de contact (7) des électrodes de compensation (1, 2, 2a, 2b, 3) correspond au nombre des électrodes de capteur (5, 6), toutes les électrodes de capteur (5, 6) présentant le même nombre de trous de contact (7).

8. Capteur capacitif de distance (4, 4y1, 4y2, 4z) selon l'une des revendications précédentes, **caractérisé en ce que** le capteur capacitif de distance (4, 4y1, 4y2, 4z) présente, pour la mise en contact électrique des électrodes de capteur (5, 6) et/ou des électrodes de compensation (1, 2, 2a, 2b, 3), des conducteurs électriques de type blindé (11s), les conducteurs (11s) pouvant être commutés sur le même potentiel électrique que les électrodes de capteur (5, 6) et/ou les électrodes de compensation (1, 2, 2a, 2b, 3) respectives et/ou le capteur de distance présentant au moins une électrode de blindage électrique passive (13) sur un potentiel électrique défini de manière fixe (14).

9. Capteur capacitif de distance (4, 4y1, 4y2, 4z) selon l'une des revendications précédentes, **caractérisé en ce que** le capteur capacitif de distance (4, 4y1, 4y2, 4z) est configuré pour la mesure continue en temps réel de la distance (d, dy1, dy2, dz) avec l'objet (17, 50) et/ou présente une réponse linéaire au moyen de la possibilité de compensation.

10. Roulement de précision (16), en particulier palier lisse, palier à air, palier magnétique ou palier à roulement, avec deux parties mobiles relativement l'une par rapport à l'autre (17, 18), **caractérisé en ce que** le roulement de précision (16) présente au moins un capteur capacitif de distance (4, 4y1, 4y2, 4z) selon la revendication 1 ou 2 pour la mesure, en particulier la mesure en temps réel, d'au moins une distance (d, dy1, dy2, dz) entre les deux parties mobiles (17, 18).

11. Roulement de précision (16) selon la revendication 10, **caractérisé en ce que** le roulement de précision (16) présente au moins deux capteurs capacitifs de distance (4y1, 4y2) placés espacés l'un de l'autre si bien qu'un écart d'un parallélisme idéal des deux parties mobiles (17, 18) l'une par rapport à l'autre peut être compensé.

12. Roulement de précision (16) selon la revendication 10 ou 11, **caractérisé en ce que** le roulement de précision (16) est configuré comme un palier de translation, en particulier cependant qu'il s'agit d'un palier linéaire (16) qui présente, dans un axe (y) perpendiculaire à l'axe linéaire (x), au moins deux capteurs capacitifs de distance (4y1, 4y2) placés espacés l'un de l'autre si bien que des torsions autour de l'axe linéaire (x) peuvent être compensées.

13. Roulement de précision (16) selon l'une des revendications 10 à 12, **caractérisé en ce que** le roulement de précision (16) est prévu pour l'utilisation dans un appareil de mesure de précision, en particulier une machine de mesure de coordonnées, un théodolite, un scanner laser ou un suiveur laser et/ou une machine d'usinage de précision et/ou un bras articulé de précision.

14. Procédé pour la détermination continue d'une distance (d, dy1, dy2, dz) entre deux parties de machine (17, 18) qui sont prévues pour le déplacement parallèle, en particulier par translation, de manière spécifique linéaire, l'une par rapport à l'autre le long d'une direction de guidage définie (x), en particulier avec un écart nominal de 1000 microns maximum, **caractérisé en ce qu'**un capteur capacitif de distance (4, 4y1, 4y2, 4z) selon la revendication 1 ou 2 est utilisé pour la détermination en continue de la distance (d, dy1, dy2, dz).

15. Produit programme d'ordinateur qui est mémorisé sur un support lisible par machine ou signal de données d'ordinateur, représenté par une onde électromagnétique, avec un code de programme qui est approprié pour exécuter le procédé selon la revendication 14, le produit programme d'ordinateur étant produit pour l'exécution sur une unité de commande et d'évaluation d'un capteur capacitif de distance (4, 4y1, 4y2, 4z) selon la revendication 1 ou 2.

Fig. 1a

Fig. 1b

Fig. 2

Fig. 3

Fig. 4

Fig. 5

Fig. 6

Fig. 7

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4187460 A
- US 4347478 A
- US 20110095771 A1
- US 20120041712 A1
- US 9435645 B2
- US 9891035 B2